# EUROPEAN PATENT SPECIFICATION

(11) **EP 1 059 421 B1**
(45) Date of publication and mention of the grant of the patent: **17.08.2005**
(21) Application number: 99304510.3
(22) Date of filing: 09.06.1999
(51) Int. Cl.: F01D 15/10

(54) **Microturbine power generating system**
Mikroturbinenkraftanlage
Système de microturbine pour génération d'énergie

(43) Date of publication of application: 13.12.2000
(73) Proprietor: AlliedSignal Inc., Morristown, New Jersey 07962-2245 (US)
(72) Inventor: Nims, Robert, California 90275 (US); O'Brien, Patrick, California 90503 (US); Emmerson, Terrance, California 90254 (US); Denk, Joseph, California 90266 (US)
(74) Representative: Freeman, Jacqueline Carol

(56) References cited:
- EP-A- 0 472 294
- US-A- 4 011 737
- US-A- 4 598 542

## Description

### BACKGROUND OF THE INVENTION

The present invention relates generally to microturbine power generating systems. More specifically, the present invention relates to modular, distributed power generating units.

The United States Electric Power Research Institute (EPRI) which is the uniform research facility for domestic electric utilities, predicts that up to 40% of all new generation could be provided by distributed generators by the year 2006. In many parts of the world, the lack of electric infrastructure (transmission and distribution lines) will greatly expedite the commercialization of distributed generation technologies since central plants not only cost more per kilowatt, but also must have expensive infrastructure installed to deliver the product to the consumer.

Small, multi-fuel, modular distributed microturbine generation units could help alleviate current afternoon "brownouts" and "blackouts" prevalent in many parts of the world. A simple, single moving part concept would allow for low technical skill maintenance and low overall cost would allow for wide spread purchase in those parts of the world where capital is sparse. In addition, given the United States emphasis on electric deregulation and the world trend in this direction, consumers of electricity would have not only the right to choose the correct method of electric service but also a new cost effective choice from which to chose. U.S. Patent No. 4,754,607, which is assigned to the assignee of the present invention, discloses a microturbine power generating system suitable for cogeneration applications.

Yet to make these units commercially attractive to consumers, improvements are needed in areas such as increasing fuel-efficiency, reducing size and weight, and lowering thermal signature, noise, maintenance and cost penalties.

### SUMMARY OF THE INVENTION

According to the present invention there is provided a microturbine power generating system, comprising: a turbine for converting gaseous heat energy into mechanical energy; a power converter for converting the mechanical energy produced by the turbine into electrical energy, the power converter having a rotating portion and a non-rotating portion; and a single tieshaft having a diameter of approximately 0.25 to 0.5 inches (0.635-1.27 x 10⁻²m), the tieshaft connecting the turbine and the rotating portion of the power converter, wherein, during operation of the microturbine power generating system, said tieshaft, turbine and rotating portion of the power converter rotate in unison at speeds of at least about 80,000 rpm.

The invention can be regarded as a microturbine power generating system including an electrical generator and a turbine that can be rotated by a single shaft. Hot, expanding gases resulting from the combustion are expanded through a turbine, and the resulting turbine power generated by the turbine is used for powering the electrical generator. The microturbine power generating system further includes a single shaft connecting the turbine and electrical generator in prestressed relation to allow the electrical generator to rotate in unison with the turbine and to thereby use the mechanical energy extracted by the turbine to produce power.

Electricity production of the system is especially flexible. A variable-frequency ac output produced by the electrical generator can be rectified to dc power. The dc power can then be chopped by an inverter to produce ac power having a selected frequency.

### BRIEF DESCRIPTION OF THE DRAWINGS

FIG. 1 is a block diagram of a power generating system according to the present invention; and
FIG. 2 is a cross-section view of an engine core for the power generating system.

### DESCRIPTION OF THE PREFERRED EMBODIMENT

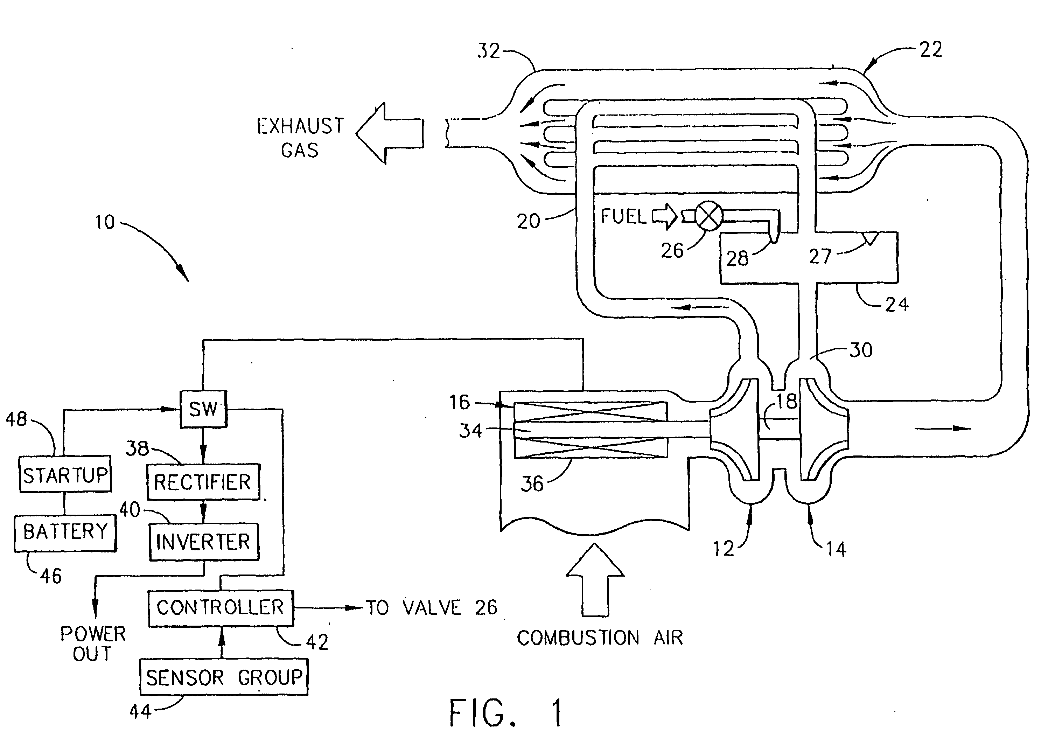

Referring to FIG. 1, a power generating system 10 according to the present invention is illustrated. The power generating system 10 includes a compressor 12, a turbine 14 and an electrical generator 16. The electrical generator 16 is cantilevered from the compressor 12. The compressor 12, the turbine 14 and the electrical generator 16 can be rotated by a single shaft 18. Although the compressor 12, turbine 14 and electrical generator 16 can be mounted to separate shafts, the use of a single common shaft 18 for rotating the compressor 12, the turbine 14 and the electrical generator 16 adds to the compactness and reliability of the power generating system 10.

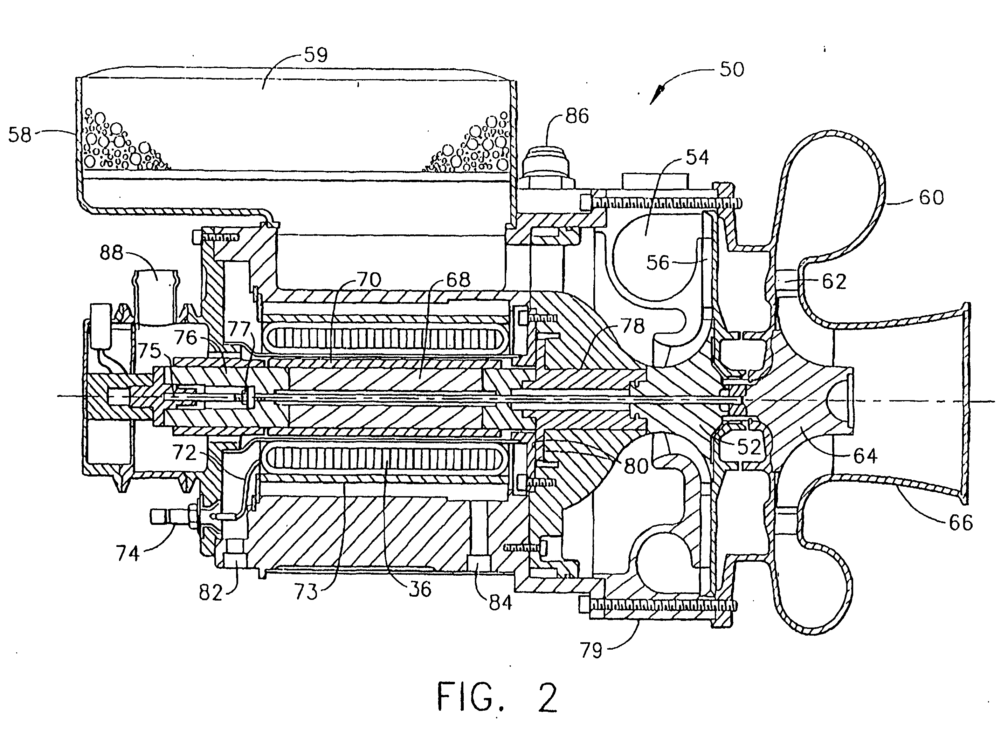

The shaft 18 can be supported by self-pressurized air bearings such as foil bearings. As is shown in Figure 2, the shaft 18 is supported by journal foil bearings 76 and 78 and thrust foil bearings 80. The foil bearings eliminate the need for a separate bearing lubrication system and reduce the occurrence of maintenance servicing.

Air entering an inlet of the compressor 12 is compressed. Compressed air leaving an cutlet of the compressor 12 is circulated through cold side passages 20 in a cold side of a recuperator 22. In the recuperator 22, the compressed air absorbs heat, which enhances combustion. The heated, compressed air leaving the cold side of the recuperator 22 is supplied to a combustor 24.

Fuel is also supplied to the combustor 24. Both gaseous and liquid fuels can be used. In gaseous fuel mode, any suitable gaseous fuel can be used. Choices of fuel include diesel, flair gas, off gas, gasoline, naphtha, propane, JP-8, methane, natural gas and other man-made gases.

The flow of fuel is controlled by a flow control valve 26. The fuel is injected into the combustor 24 by an injection nozzle 28.

Inside the combustor 24 the fuel and compressed air are mixed and ignited by an igniter 27 in an exothermic reaction. In the preferred embodiment, the combustor 24 contains a suitable catalyst capable of combusting the compressed, high temperature, fuel-air mixture at the process conditions. Some known catalysts usable in the combustor 24 include platinum, palladium, as well as metal oxide catalyst with active nickel and cobalt elements.

After combustion, hot, expanding gases resulting from the combustion are directed to an inlet nozzle 30 of the turbine 14. The inlet nozzle 30 has a fixed geometry. The hot, expanding gases resulting from the combustion is expanded through the turbine 14, thereby creating turbine power. The turbine power, in turn, drives the compressor 12 and the electrical generator 16.

Turbine exhaust gas is circulated by hot side passages 32 in a hot side of the recuperator 22. Inside the recuperator 22, heat from the turbine exhaust gas on the hot side is transferred to the compressed air on the cold side. In this manner, some heat of combustion is recuperated and used to raise the temperature of the compressed air en route to the combustor 24. After surrendering part of its heat, the gas exits the recuperator 22. Additional heat recovery stages could be added onto the power generating system 10.

The generator 16 can be a ring-wound, two-pole toothless (TPTL) brushless permanent magnet machine having a permanent magnet rotor 34 and stator windings 36. The turbine power generated by the rotating turbine 14 is used to rotate the rotor 34. The rotor 34 is attached to the shaft 18. When the rotor 34 is rotated by the turbine power, an alternating current is induced in the stator windings 36. Speed of the turbine 34 can be varied in accordance with external energy demands placed on the system 10. Variations in the turbine speed will produce a variation in the frequency of the alternating current (i.e., wild frequencies) generated by the electrical generator 16. Regardless of the frequency of the ac power generated by the electrical generator 16, the ac power can be rectified to dc power by a rectifier 38, and then chopped by a solid-state electronic inverter 40 to produce ac power having a fixed frequency. Accordingly, when less power is required, the turbine speed can be reduced without affecting the frequency of the ac output.

Moreover, reducing the turbine speed reduces the airflow because the compressor runs slower. Consequently, the turbine inlet temperature remains essentially constant, thus maintaining a high efficiency at part load.

Use of the rectifier 38 and the inverter 40 allows for wide flexibility in determining the electric utility service to be provided by the power generating system of the present invention. Because any inverter 40 can be selected, frequency of the ac power can be selected by the consumer. If there is a direct use for ac power at wild frequencies, the rectifier 38 and inverter 40 can be eliminated.

The power generating system 10 can also include a battery 46 for providing additional storage and backup power. When used in combination with the inverter 40, the combination can provide uninterruptible power for hours after generator failure. Additionally, the controller causes the battery 46 to supply a load when a load increase is demanded. The battery 46 can be sized to handle peak load demand on the system 10.

During operation of the power generating system 10, heat is generated in the electrical generator 16 due to inefficiencies in generator design. In order to extend the life of the electrical generator 16, as well as to capture useful heat, compressor inlet air flows over the generator 16 and absorbs excess heat from the generator 16. The rectifier 38 and the inverter 40 can also be placed in the air stream. After the air has absorbed heat from the aforementioned sources, it is compressed in the compressor 12 and further pre-heated in the recuperator 22.

A controller 42 controls the turbine speed by controlling the amount of fuel flowing to the combustor 24. The controller 42 uses sensor signals generated by a sensor group 44 to determine the external demands upon the power generating system 10. The sensor group 44 could include sensors such as position sensors, turbine speed sensors and various temperature and pressure sensors for measuring operating temperatures and pressures in the system 10. Using the aforementioned sensors, the controller 42 controls both startup and optimal performance during steady state operation. The controller 42 can also determine the state of direct current storage in the battery 46, and adjust operations to maintain conditions of net charge, net drain, and constant charge of the battery.

A switch/starter control 48 can be provided off-skid to start the power generating system 10. Rotation of the compressor 12 can be started by using the generator 16 as a motor. During startup, the switch/starter control 48 supplies an excitation current to the stator windings 36 of the electrical generator 16. Startup power is supplied by the battery 46. In the alternative, a compressed air device could be used to motor the power generating system 10.

Referring to FIG. 2, the "engine core" 50 of the power generating system 10 is shown. The compressor 12 includes an impeller 52 having a bore, a compressor scroll 54 and a diffuser channel 56. Air entering an air inlet 58 is filtered by an air filter 59 and directed to the compressor scroll 54. Air flowing out of the compressor scroll 54 is directed to the recuperator 22.

The turbine 14 includes a turbine scroll 60, a plurality of fixed nozzle vanes 62, and a boreless turbine wheel 64. Hot expanding gases leaving the combustor 24 are directed into the turbine scroll 60 and through the nozzle vanes 62, which redirect the hot expanding gas onto the turbine wheel 64. Turbine exhaust gas leaves the turbine 14 through an exhaust diffuser 66, which reduces the temperature and noise of the turbine exhaust gas.

The rotor 34 of the electrical generator 16 includes magnets 68 made of a rare earth material such as samarium cobalt. The magnets 68 are surrounded by a containment sleeve 70 made of a non-magnetic material such as Inconel 718. The stator windings 36 are housed in a generator housing 73. The rotor 34 has a bore and an optional containment sleeve (not shown) contacting a surface of the bore. Power conductors 72 extend from the stator windings 36 and terminate in a power connector stud 74, which is secured to a base 79. The base 79 provides support for a fuel inlet, the air inlet 58, the compressor 12, the turbine 14, the generator 16, the recuperator 22, the combustor 24, the rectifier 38, and the inverter 40, to enable the system 10 to exist as a packaged unit.

The single shaft 18 is shown in FIG. 2 as a tieshaft 75, which extends through the bores in the rotor 34 and the compressor impeller 52. The tieshaft 75 is thin, having a diameter of approximately 0.25 inches (0.635 x 10⁻²m) to 0.5 inches (1.27 x 10⁻²m). The bores have clearances that allow the tieshaft 75 to extend through the rotor 34 and the impeller 52. However, the tieshaft 75 does not extend through the turbine wheel 64. Instead, the tieshaft 75 is secured to the turbine wheel 64. The tieshaft 75 can be secured to the center of the turbine wheel hub by an inertia weld. Thus, the turbine wheel 64 is boreless in that it does not have a bore through which the tieshaft 75 extends. Eliminating the bore reduces stresses in the turbine wheel 64.

When clamped together by the tieshaft 75, the compressor impeller 52, the turbine wheel 64 and the rotor 34 are rotated as a single unit. Under high operating temperatures and rotational speeds, however, the impeller 52, the turbine wheel 64 and the rotor 34 tend to expand and grow apart and their faces tend to lose contact. Flexing of the tieshaft 75 during operation also tends to separate the faces. To maintain contact between the faces of the impeller 52, the turbine wheel 64 and the rotor 34 at high rotational speeds (80,000 rpm and above), the tieshaft 75 is preloaded. For example, a tieshaft 75 made of Inconel 718 can be preloaded in tension to about 90% of yield strength. During assembly, the tieshaft 75 is preloaded, the impeller 52 and the rotor 34 are slid over the tieshaft 75, and a nut 77 is secured to a threaded end of the tieshaft 75. The tension in the tieshaft 75 is maintained as the nut 77 is turned.

The rotating unit 52, 64, 34 and 75 is supported in a radial direction by inboard and outboard foil journal bearings 76 and 78. The rotating unit 52, 64, 34 and 75 is supported in an axial direction by a foil thrust bearing 80.

Various coolant ports are provided for the engine core 50. Provided are ports 82 and 84 for circulating a coolant over the stator windings 40. Also provided are ports 86 and 88 for circulating a coolant over the foil bearings 76, 78 and 80.

The power generating system 10 can be built in several major modules such as a rotating module, a heat exchanger module, a combustor module, and an electronics module. Each of these modules is relatively lightweight and compact. The modules can be replaced without breaking liquid lines. The use of foil bearings 76, 78 and 80 eliminates the need for an oil-based lubrication system and, therefore, results in low maintenance of the power generating system 10. Scheduled maintenance would consist primarily of replacing the igniter 27, the filter 59 and catalyst elements in the combustor 24.

The power generating system 10 operates on a conventional recuperated Brayton cycle. The Brayton cycle can be operated on a relatively low pressure ratio (e.g., 3.8) to maximize overall efficiency; since, in recuperated cycles, the lower the pressure ratio, the closer the turbine exhaust temperature is to the inlet temperature. This allows heat addition to the cycle at high temperature and, in accordance with the law of Carnot, reduces the entropic losses associated with supplying heat to the cycle. This high temperature heat addition results in an increased overall cycle efficiency.

The values that follow are provided as an example. Air is compressed in a single stage radial compressor to 3.8 bars (3.8 x 10⁵ Nm⁻²). The compressed air can be directed to the recuperator 22 where the temperature of the compressed air is increased using the waste heat from the turbine exhaust gas. The temperature of the exhaust gas from the turbine is limited to about 1,300 DEG°F (431.858K) in order to help extend the life of the recuperator 22. For exhaust gas temperatures above 1,300 DEG°F, the recuperator 22 can be made of super alloys instead of stainless steel. The recuperator 22 can be designed for either 85% or 90% effectiveness depending on the economic needs of the customer. In the most efficient configuration, and using the 90% recuperation, the overall net cycle efficiency is 30%, yielding a high heating value heat rate of approximately 11,900 BTU/kWh (12554.4 x 10³ J/kWh) on diesel.

After being heated in the recuperator 22, the compressed air is directed to the combustor 24, where additional heat is added to raise the temperature of the compressed air to 1,650 DEG°F (626.458k. A combustor 24 designed according to a conventional design can yield a Nox level of less than 25 ppm, and a combustor 24 using a catalyst can yield a Nox rate that is virtually undetectable (commercial Nox sensors are limited to a 2 to 3 ppm detection range). The high enthalpic gas is then expanded through the turbine 14. The impeller 52, the turbine wheel 64, the rotor 34, and the tieshaft 75 - the only moving parts in the engine core 50 - spin as a single unit at high speeds of approximately 80,000 rpm or more. The resulting generator output frequency of arousd 1,200 hertz is then reduced by the inverter 40 to a grid-compatible 50 or 60 cycles. Resulting is a high power density typified by low weight (about a third of the size of a comparable diesel generator) and a small footprint (for example, approximately 3 feet (0.9144ₘ) by 5 feet (1.524ₘ) by 6 feet (1.8288ₘ) high).

The high power density and low weight of the technology is made possible through the high speed components which permits large amounts of power using a minimum of material. The unit is completely self-contained in a weather proof enclosure. The power generating system 10 is "plug and play", requiring little more than a supply of clean fuel, liquid or gas.

Thus disclosed is a power generating system 10 that can use multiple fuels including natural gas, diesel and JP-8. The power generating system 10 has a low thermal signature and minimal noise generation. The use of air bearings eliminates the need for an oil-based lubrication system. The electrical generation system 10 has high reliability and minimal service requirements due to single moving part design. The use of a solid-state electronic inverter allows the system 10 to provide a variable AC output. Installation is easy due to a modular and self contained design, and servicing is easy because the system 10 has one moving part and major parts that are easily accessible. The width, length and height of the engine core 50 can be adjusted to fit a wide variety of dimensional requirements.

The power generating system 10 is smaller, lighter, more fuel-efficient and has lower thermal signature, noise, maintenance and cost penalties than comparable internal combustion engines. Therefore, due to its low installation costs, high efficiency, high reliability and simple, low cost maintenance, the power generating system 10 provides lower operating and fixed costs than power generators of comparable size.

Potential applications for the power generating system 10 are many and diverse. Applications include use in off-grid applications for standalone power, on-grid applications for peak shaving, load following or base load service, emergency back-up and uninterruptible power supply, prime mover applications (e.g., pump, air conditioning) and automotive hybrid vehicles.

The invention is not limited to the specific embodiments disclosed above. For example, the present invention could be configured without the electrical generator 16. Turbine power would transmitted and applied directly, as in the case of a mechanically driven refrigeration system. Therefore, the present invention is construed according to the claims that follow.

## Claims

1. A microturbine power generating system (10), comprising:
a turbine (14) for converting gaseous heat energy into mechanical energy; a power converter (16) for converting the mechanical energy produced by the turbine into electrical energy, the power converter having a rotating portion (34) and a non-rotating portion (36); and a single tieshaft (75) having a diameter of approximately 6,35-12,7 mm (0.25 to 0.5 inches), the tieshaft connecting the turbine and the rotating portion of the power converter (16), wherein, during operation of the microturbine power generating system, said tieshaft (75), turbine (14) and rotating portion (34) of the power converter (16) rotate in unison at speeds of at least about 80,000 rpm.

2. The microturbine power generating system of claim 1 further comprising:
a combustor (24) for producing gaseous heat energy by igniting an air and fuel mixture;
a fuel supply for supplying fuel to the combustor (24);
a compressor (12) for compressing intake air and supplying the compressed air to the combustor (24);
the turbine (14) receiving heated air released from combustion and the compressor (12) being coupled in prestressed relation with the turbine (14) and the power converter on the shaft (75) to allow the compressor (12) to rotate in unison with the turbine (14) and to thereby use the mechanical energy extracted by the turbine (14) to power the compressor (12).

3. The microturbine power generating system of claim 2 wherein the compressor (12) is positioned between the turbine (14) and the power converter (16).

4. The microturbine power generating system of claim 2 further comprising a recuperator (22) connected to the compressor (12) for adding heat to the compressed air mixture, wherein the recuperator (22) comprises first and second passages, the first passage receiving high temperature compressed air from the compressor (12) and supplying hot side, higher temperature compressed air to the combustor (24), the second passage receiving high temperature exhaust air from the turbine (14) and providing lower temperature exhaust air.

5. The microturbine power generating system of claim 2 wherein the power converter (16) comprises an electric generator that is powered by mechanical energy from the turbine (14), the electrical generator producing alternating electric current when powered by the turbine (14).

6. The microturbine power generating system of claim 5 wherein the power converter (16) further comprises a rectifier (38) coupled to the electrical generator for the rectifying alternating electric current produced by the generator.

7. The microturbine power generating system of claim 6 wherein the power converter (16) further comprises an inverter (40) which is coupled to the rectifier (38) and accepts direct current from the rectifier (38) and converts the direct current to alternating current of a preselected frequency.

8. The microturbine power generating system of claim 7 wherein the frequency of the alternating current is independent of the speed of the turbine (14).

9. The microturbine power generating system of claim 2 further comprising: support means for the fuel inlet, the air inlet, the compressor (12), the recuperator, the combustor (24), the turbine (14), the generator (16), the rectifier (38), and the inverter (40), to enable the system to exist as a packaged unit.

10. The microturbine power generating system of claim 2 wherein the combustor (24) includes a catalytic element for thoroughly reacting and oxidizing fuel and air mixture.

11. The microturbine power generating system of claim 2, wherein the turbine (14) includes an exhaust passage and the compressor (12) includes an air intake passage that is orthogonal to the turbine exhaust passage.

12. The microturbine power generating system of claim 1 further comprising a rotating module comprising an impeller wheel, wherein the tieshaft (75) is prestressed, the tieshaft (75) extending through bores in the impeller wheel and turbine, the system further comprising a combustor group for providing hot expanding gases to the turbine wheel and a heat exchanger group for heating air compressed by the rotating portion.

13. The system of claim 12, further comprising an electronics group for controlling fuel flow to the combustor (24).

14. The system of claim 12, wherein the turbine wheel (64) is boreless.

15. The microturbine power generating system (10) as claimed in claim 1, further comprising first and second foil journal bearings (76, 78) for journalling the shaft (75), the first and second journal bearings (76, 78) being located on opposite sides of the electrical generator (16), and a thrust foil bearing (80) for providing axial support for the shaft, the foil thrust bearing (80) being located between the electrical generator (16) and the turbine (14).

16. The system of claim 15, further comprising a compressor (12) including an impeller (52) rotatable by the shaft (75).

17. The system of claim 16, wherein the shaft (75) is prestressed.

## Patentansprüche

1. Mikroturbinenstromerzeugungssystem (10), das Folgendes umfasst:
eine Turbine (14) zum Umwandeln gasförmiger Wärmeenergie in mechanische Energie; einen Leistungswandler (16) zum Umwandeln der mechanischen Energie, die durch die Turbine erzeugt wird, in elekrische Energie, wobei der Leistungswandler einen rotierenden Abschnitt (34) und einen nicht rotierenden Abschnitt (36) aufweist; und eine Verbindungswelle (75) mit einem Durchmesser von etwa 6,35 - 12,7 mm (0,25 bis 0,5 Zoll), wobei die Verbindungswelle die Turbine und den rotierenden Abschnitt des Leistungswandlers (16) miteinander verbindet und sich die Verbindungswelle (75), die Turbine (14) und der rotierende Abschnitt (34) des Leistungswandlers (16) während des Betriebs des Mikroturbinenstromerzeugungssystems mit einer Drehzahl von mindestens etwa 80.000 U/min synchron drehen.

2. Mikroturbinenstromerzeugungssystem nach Anspruch 1, das des Weiteren Folgendes umfasst:
eine Brennkammer (24) zur Erzeugung von gasförmiger Wärmeenergie durch Zünden eines Kraftstoff-Luft-Gemischs;
eine Kraftstoffversorgung zum Zuführen von Kraftstoff zur Brennkammer (24);
einen Kompressor (12) zum Verdichten der Ansaugluft und zum Zuführen der komprimierten Luft zur Brennkammer (24);
wobei die Turbine (14) erwärmte Luft, die durch die Verbrennung frei wird, empfängt und der Kompressor (12) in vorgespanntem Verhältnis mit der Turbine (14) und dem Leistungswandler an der Welle (75) gekoppelt ist, um dem Kompressor (12) zu ermöglichen, sich synchron mit der Turbine (14) zu drehen und **dadurch** die mechanische Energie, die durch die Turbine (14) entnommen wird, für den Antrieb des Kompressors (12) zu verwenden.

3. Mikroturbinenstromerzeugungssystem nach Anspruch 2, wobei der Kompressor (12) zwischen der Turbine (14) und dem Leistungswandler (16) angeordnet ist.

4. Mikroturbinenstromerzeugungssystem nach Anspruch 2, das des Weiteren eine Rückgewinnungsvorrichtung (22) umfasst, die mit dem Kompressor (12) verbunden ist, um dem verdichteten Luftgemisch Wärme hinzuzufügen, wobei die Rückgewinnungsvorrichtung (22) einen ersten und zweiten Durchgang umfasst, der erste Durchgang verdichtete Luft mit hoher Temperatur von dem Kompressor (12) empfängt und der Brennkammer (24) heißseitige verdichtete Luft mit höherer Temperatur zuführt und der zweite Durchgang Abluft mit hoher Temperatur von der Turbine (14) empfängt und Abluft mit niedrigerer Temperatur bereitstellt.

5. Mikroturbinenstromerzeugungssystem nach Anspruch 2, wobei der Leistungswandler (16) einen elekrischen Generator umfasst, der von mechanischer Energie von der Turbine (14) angetrieben wird, wobei der elekrische Generator einen elekrischen Wechselstrom erzeugt, wenn er von der Turbine (14) angetrieben wird.

6. Mikroturbinenstromerzeugungssystem nach Anspruch 5, wobei der Leistungswandler (16) des Weiteren einen Gleichrichter (3 8) umfasst, der mit dem elekrischen Generator gekoppelt ist, um den elekrischen Wechselstrom, der von dem Generator erzeugt wird, gleichzurichten.

7. Mikroturbinenstromerzeugungssystem nach Anspruch 6, wobei der Leistungswandler (16) des Weiteren einen Wechselrichter (40) umfasst, der mit dem Gleichrichter (38) gekoppelt ist, einen Gleichstrom vom Gleichrichter (38) annimmt und den Gleichstrom in einen Wechselstrom mit einer vorgewählten Frequenz umwandelt.

8. Mikroturbinenstromerzeugungssystem nach Anspruch 7, wobei die Frequenz des Wechselstroms von der Drehzahl der Turbine (14) unabhängig ist.

9. Mikroturbinenstromerzeugungssystem nach Anspruch 2, das des Weiteren Folgendes umfasst: ein Stützmittel für den Kraftstoffeinlass, den Lufteinlass, den Kompressor (12), die Rückgewinnungsvorrichtung, die Brennkammer (24), die Turbine (14), den Generator (16), den Gleichrichter (38) und den Wechselrichter (40), damit das System als verpackte Einheit bestehen kann.

10. Mikroturbinenstromerzeugungssystem nach Anspruch 2, wobei die Brennkammer (24) ein Katalysatorelement für eine gründliche Reaktion und Oxidation des Kraftstoff-Luft-Gemischs umfasst.

11. Mikroturbinenstromerzeugungssystem nach Anspruch 2, wobei die Turbine (14) einen Abgasdurchlass umfasst und der Kompressor (12) einen Ansaugdurchlass umfasst, der senkrecht zum Abgasdurchlass der Turbine angeordnet ist.

12. Mikroturbinenstromerzeugungssystem nach Anspruch 1, das des Weiteren ein rotierendes Modul umfasst, das ein Flügelrad umfasst, wobei die Verbindungswelle (75) vorgespannt ist und sich die Verbindungswelle (75) durch Bohrungen im Flügelrad und der Turbine erstreckt, und das System des Weiteren Folgendes umfasst:
eine Brennkammergruppe, um dem Turbinenrad heiße sich ausdehnende Gase bereitzustellen, und eine Wärmetauschergruppe, um Luft zu erwärmen, die der rotierende Abschnitt verdichtet hat.

13. System nach Anspruch 12, das des Weiteren eine Elektronikgruppe zur Steuerung des Kraftstoffflusses zur Brennkammer (24) umfasst.

14. System nach Anspruch 12, wobei das Turbinenrad (64) bohrungsfrei ist.

15. Mikroturbinenstromerzeugungssystem (10) nach Anspruch 1, das des Weiteren Folgendes umfasst: ein erstes und ein zweites Folienradiallager (76, 78) zum Lagern der Welle (75), wobei das erste und zweite Radiallager (76, 78) an gegenüberliegenden Seiten des elekrischen Generators (16) angeordnet sind, und ein Folienaxiallager (80), um der Welle eine axiale Stützung bereitzustellen, wobei das Folienaxiallager (80) zwischen dem elekrischen Generator (16) und der Turbine (14) angeordnet ist.

16. System nach Anspruch 15, das des Weiteren einen Kompressor (12) umfasst, der ein Flügelrad (52) umfasst, das von der Welle (75) gedreht werden kann.

17. System nach Anspruch 16, wobei die Welle (75) vorgespannt ist.

## Revendications

1. Un système de génération d'énergie à microturbine (10) comprenant :
une turbine (14) pour la conversion d'énergie thermique gazeuse en énergie mécanique ; un convertisseur de puissance (16) pour convertir l'énergie mécanique produite par la turbine en énergie électrique, le convertisseur de puissance possédant une partie rotative (34) et une partie non rotative (36) ; et un axe d'accouplement unique (75) possédant un diamètre d'environ 6,35 à 12,7 mm (0,25 à 0,5 pouces), l'axe d'accouplement reliant la turbine et la portion rotative du convertisseur de puissance (16), où, pendant le fonctionnement du système de génération d'énergie à microturbine, lesdits axe d'accouplement (75), turbine (14) et portion rotative (34) du convertisseur de puissance (16) tournent à l'unisson à des vitesses d'au moins 80 000 tr/mn.

2. Le système de génération d'énergie à microturbine selon la Revendication 1 comprenant en outre :
une chambre de combustion (24) pour la production d'énergie thermique gazeuse par la mise à feu d'un mélange d'air et de carburant ;
un approvisionnement en carburant afin de fournir du carburant à la chambre de combustion (24) ;
un compresseur (12) pour comprimer l'air entrant et pour fournir l'air comprimé à la chambre de combustion (24) ;
une turbine (14) recevant de l'air chauffé libéré par la combustion et le compresseur (12) étant couplé dans une relation précontrainte avec la turbine (14) et le convertisseur de puissance sur l'axe (75) afin de permettre au compresseur (12) de tourner à l'unisson avec la turbine (14) et, par la même, d'utiliser l'énergie mécanique extraite par la turbine (14) pour alimenter le compresseur (12).

3. Le système de génération d'énergie à microturbine selon la Revendication 2 où le compresseur (12) est positionné entre la turbine (14) et le convertisseur de puissance (16).

4. Le système de génération d'énergie à microturbine selon la Revendication 2 comprenant en outre un récupérateur (22) relié au compresseur (12) pour ajouter de la chaleur au mélange d'air comprimé, où le récupérateur (22) comprend un premier et un deuxième canal, le premier canal recevant de l'air comprimé à haute température du compresseur (12) et fournissant de l'air comprimé à plus haute température côté four à la chambre de combustion (24), le deuxième canal recevant de l'air d'évacuation à haute température de la turbine (14) et fournissant de l'air d'évacuation à une température moins élevée.

5. Le système de génération d'énergie à microturbine selon la Revendication 2 où le convertisseur de puissance (16) comprend un générateur électrique qui est alimenté par l'énergie mécanique provenant de la turbine (14), le générateur électrique produisant un courant électrique alternatif lorsqu'il est alimenté par la turbine (14).

6. Le système de génération d'énergie à microturbine selon la Revendication 5 où le convertisseur de puissance (16) comprend en outre un redresseur (38) couplé au générateur électrique afin de redresser le courant électrique alternatif produit par le générateur.

7. Le système de génération d'énergie à microturbine selon la Revendication 6 où le convertisseur de puissance (16) comprend en outre un inverseur (40) qui est couplé au redresseur (3 8) et accepte du courant direct du redresseur (38) et convertit le courant direct en courant alternatif d'une fréquence présélectionnée.

8. Le système de génération d'énergie à microturbine selon la Revendication 7 où la fréquence du courant alternatif est indépendante de la vitesse de la turbine (14).

9. Le système de génération d'énergie à microturbine selon la Revendication 2 comprenant en outre : un élément de structure pour l'arrivée de carburant, l'arrivée d'air, le compresseur (12), le récupérateur, la chambre de combustion (24), la turbine (14), le générateur (16), le redresseur (38) et l'inverseur (40), afin de permettre au système de se présenter sous la forme d'une unité compacte.

10. Le système de génération d'énergie à microturbine selon la Revendication 2 où la chambre de combustion (24) comprend un élément catalytique pour réagir de manière complète et oxyder le mélange d'air et de carburant.

11. Le système de génération d'énergie à microturbine selon la Revendication 2 où la turbine (14) comprend un canal d'échappement et le compresseur (12) comprend un canal d'arrivée d'air qui est orthogonal par rapport au canal d'échappement de la turbine.

12. Le système de génération d'énergie à microturbine selon la Revendication 1 comprenant en outre un module rotatif comprenant une roue héliocentrifuge, où l'axe d'accouplement (75) est précontraint, l'axe d'accouplement (75) sortant par des ouvertures dans la roue héliocentrifuge et la turbine, le système comprenant en outre un groupe chambre de combustion pour fournir des gaz d'expansion chauds à la roue de turbine et un groupe échangeur thermique pour chauffer l'air comprimé par la portion rotative.

13. Le système selon la Revendication 12 comprenant en outre un groupe d'éléments électroniques pour contrôler le flux de carburant vers la chambre de combustion (24).

14. Le système selon la Revendication 12 où la roue de turbine (64) est sans alésages.

15. Le système de génération d'énergie à microturbine (10) selon la Revendication 1 comprenant en outre un premier et un deuxième palier-feuille lisse (76, 78) pour faire tourner l'axe (75), le premier et le deuxième palier-feuille lisse (76, 78) étant placés sur des côtés opposés du générateur électrique (16) et un palier-feuille de butée (80) pour fournir un support axial à l'axe, le palier-feuille de butée (80) étant placé entre le générateur électrique (16) et la turbine (14).

16. Le système selon la Revendication 15 comprenant en outre un compresseur (12) équipé d'une roue centrifuge (52) pouvant être mise en rotation par l'axe (75).

17. Le système selon la Revendication 16 où l'axe (75) est précontraint.
